# EUROPEAN PATENT SPECIFICATION

(11) **EP 1 449 331 B1**
(45) Date of publication and mention of the grant of the patent: **19.09.2007**
(21) Application number: 02804273.7
(22) Date of filing: 29.11.2002
(51) Int. Cl.: H04L 12/28, H04L 12/56, H04L 29/06

(54) **DATA TRANSMISSION**
DATENÜBERTRAGUNG
TRANSMISSION DE DONNEES

(30) Priority: 30.11.2001 EP 01310084
(43) Date of publication of application: 25.08.2004
(73) Proprietor: British Telecommunications Public Limited Company, London EC1A 7AJ (GB)
(72) Inventor: TURNBULL, Rory Stewart, Ipswich, Suffolk IP4 5PW (GB); JACOBS, Richard James, Suffolk, Ipswich, Suffolk IP12 4EA (GB); WALKER, Matthew David, Ipswich, Suffolk IP11 95N (GB)
(74) Representative: Nash, Roger William
(86) International application number: PCT/GB2002/005383
(87) International publication number: WO 2003/049373

(56) References cited:
- EP-A- 0 973 302
- US-A- 5 931 916

## Description

The invention is in the field of data transmission. The invention is particularly suitable for streaming live time-critical multimedia data.

Streaming is a method of transmitting data (especially video, audio and other multimedia data) over a computer network as a steady continuous stream. Conventional data transmission systems, in particular multimedia streaming systems, use either a reliable protocol (e.g. Transmission Control Protocol (TCP) - see Request for Comments RFC793, RFC1122 and RFC1323 of the Internet Engineering Task Force) or an unreliable protocol (e.g. User Datagram Protocol (UDP) - see Request for Comment RFC768) for the data transmission. Using a reliable protocol ensures that all the packets arrive at the receiver, but requires more bandwidth due to protocol overheads and it introduces more delay. An unreliable protocol is lightweight and faster although the data stream may be subjected to packet loss.

Systems which use these techniques to stream data from network servers to client devices (such as RealAudio™ and Microsoft^{™} Media) generally overcome packet loss by using a large receive buffer (a temporary memory area or queue) and/or a reliable protocol. As a result these systems provide multimedia data which is subject to delay, and the start-up delays are often large.

In a first aspect of the invention, there is provided a method of operating a data transmission system comprising:
transmitting data packets from a first media device to a second media device using a first transfer mode, wherein said first transfer mode employs an unreliable data transfer protocol;
identifying missing data packet(s) which do not arrive at the second media device;
sending a message or messages containing the identity of the missing data packet(s) from the second media device to the first media device,
wherein, upon completion of the transmission of data packets using said first transfer mode the first media device transmits data packet(s) identified as missing to the second media device using a second transfer mode, wherein said second transfer mode employs a reliable data transfer protocol.

Streaming both live and archived media present conflicting requirements because the priority for streaming live media is speed of transmission, whereas the priority for streaming archived material is quality. The present invention overcomes this conflict by using a combination of both protocols; an unreliable protocol initially followed by a reliable protocol. The unreliable protocol is used for the low delay transmission of packets while the reliable protocol is used at the end for the transmission of packets that were initially lost.

In a second aspect of the invention, there is provided a method of operating a media transmission device comprising;
transmitting data packets from the media transmission device to a receiver using a first transfer mode, wherein the first transfer mode employs an unreliable data transfer protocol,
receiving a message or messages containing the identity of missing data packet(s) which do not arrive at the receiver,
wherein, when the transmission of data packets is complete the media transmission device transmits data packet(s) identified as missing to the receiver using a second transfer mode, wherein said second transfer mode employs a reliable data transfer protocol.

In a third aspect of the invention, there is provided a method of operating a media reception device comprising;
receiving data packets from a transmitter which have been transmitted in a first transfer mode, wherein the first transfer mode employs an unreliable data transfer protocol,
identifying data packet(s) which were expected but are missing,
sending a message or messages to the transmitter wherein said message or messages contain the identity of the missing data packet(s),
receiving, from the transmitter, the data packet(s) which were identified in the message or messages, wherein said data packet(s) are received in a second transfer mode which employs a reliable data transfer protocol.

In a fourth aspect of the invention, there is provided a media transmission device comprising;
transmission means for transmitting data packets from the media transmission device to a receiver using a first transfer mode, wherein said first transfer mode employs an unreliable data transfer protocol,
receiving means for receiving a message or messages containing the identity of missing data packet(s) which do not arrive at the receiver,
wherein the device further comprises,
control means arranged such that upon completion of the transmission of data packets using said first mode the media transmission device transmits data packet(s) identified as missing to the receiver using a second transfer mode, wherein said second transfer mode employs a reliable data transfer protocol.

In a fifth aspect of the invention, there is provided a media reception device comprising;
receiving means for receiving data packets from a transmitter which have been transmitted in a first transfer mode, wherein the first transfer mode employs an unreliable data transfer protocol,
identifying means for identifying data packet(s) which were expected but are missing,
sending means for sending a message or messages to the transmitter wherein said message or messages contain the identity of the missing data packet(s),
receiving means for receiving, from the transmitter, the data packet(s) which were identified in the message or messages, wherein said data packet(s) are received in a second transfer mode which employs a reliable data transfer protocol.

In a sixth aspect of the invention, there is provided a data transmission system comprising;
a media transmission device according to the fourth aspect of the invention,
a media reception device according to the fifth aspect of the invention wherein said media reception device is in communication with said media transmission device.

In an seventh aspect of the invention, there is provided a digital data carrier carrying a program of instructions executable by processing apparatus to perform the method steps as set out in any one of the first, second or third aspects of the invention. The digital data carrier may be a program storage device or an electromagnetic wave, for example.

Applications of embodiments of the present invention include personal use for recording holiday clips and sharing them in real time with family or friends while simultaneously archiving good quality footage. The transmitting client then behaves as a tape-less camcorder. Other uses include remote security applications or for use in emergency situations where visual contact with emergency personnel is time critical and not necessarily quality critical. Subsequent viewing of the footage may be more quality critical, perhaps for evidential reasons. A further application of embodiments of the present invention is conferencing.

Embodiments of the present invention will now be described, by way of example only, with reference to the accompanying figures, wherein like reference numerals refer to like parts, and in which:
Figure 1 shows a schematic overview of the system.
Figure 2 shows the structure of the media capturing and transmitting client.
Figure 3 shows the structure of the archiving server.
Figure 4 shows the structure of a receiving and displaying client.
Figure 5 is a flow chart representing stages the system during operation.

In applications where the client device uploads live content to a server for archiving, the live media is captured on a client device and transmitted to a server using an unreliable protocol. The server stores the received packets to a file. Any lost packets are recovered at the end of the transmission using a reliable protocol. Doing the media transmission in this way allows the archived media to be viewed in real-time by a third party, whilst the archiving is taking place, albeit subject to packet loss. Also, combined with layered media coding, it allows the real-time archiving of clips at a higher quality than the network connection permits.

When this technique is used for streaming content from a network server to a client device, the user will experience a low start-up delay, but may suffer packet loss during transmission of the clip. To overcome this problem the client application temporarily stores all received packets, then at the end of the clip, the lost packets can be recovered using a reliable protocol and stored on the device. If the clip was of interest it can be played again without any packet loss. If it was of little interest, it can be deleted from the client's temporary store. This offers an economical way, both in terms of time and bandwidth, of reviewing media clips before deciding whether to download a complete version.

When used in combination with layered media coding, the base layer is streamed initially using an unreliable protocol followed by the lost packets and enhancement layers. The playback quality will progressively improve as each new layer is added to those already received. For low-bandwidth scenarios this could be particularly useful as it allows a low quality preview immediately followed by progressively higher quality reviews of the clip.

Embodiments of the present invention allow media to be streamed using low delay, lightweight protocols with the effects of packet loss eliminated when reviewing or archiving the clip. Low delay viewing of live media by a 3^{rd} party at the same time as the originator is archiving the media is possible. Importantly, previews of clips are made available immediately without start-up delays, at the cost of quality of initial viewing. Subsequent display of the clip will be of a high quality. The embodiments of the present invention allow the real-time streaming of media at a higher quality than network bandwidth allows when archiving or reviewing and thus ensures effective use of low bandwidth connections. The available bandwidth is used for media transmission rather than complex packet headers and acknowledgement mechanisms

Multimedia data is transmitted from a client 102 to a network server 104 where the multimedia data is stored and can be retrieved either by the originating client 102, or by a third party 105.

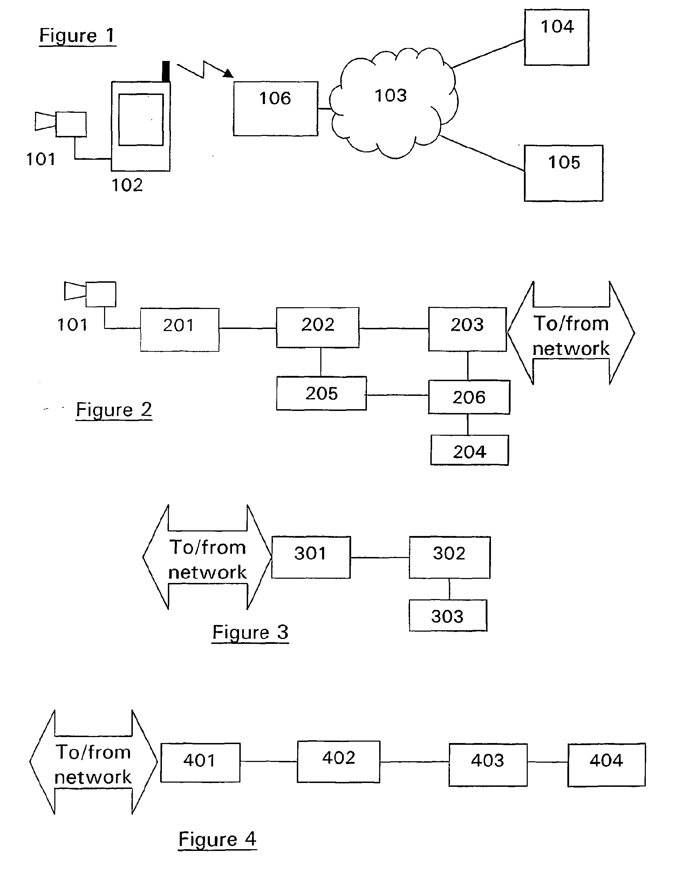

With reference to figure 1, live media is captured on a client 102 which is able to receive data from a video camera and/or microphone 101. The captured media is digitised and compressed by software running on the client 102 (which may, for example, be downloaded via the Internet) and transmitted to a server 104 over a wireless link to a wireless receiver 106 which has access to the Internet 103. The wireless link is a GSM data link running at 9.6kbit/s. The server 104 is a remote access server (RAS) and has access to the Internet 103. The link between the client 102 and the server 104 provides an IP connection which can be used to send packets of data either reliably using transmission control protocol (TCP) or unreliably using the user datagram protocol (UDP). A third party client 105 which also has access to the Internet 103 may join the session and receive and transmit data either using TCP or UDP.

UDP provides a mechanism for sending data over IP using little additional overhead, which is important in the wireless environment where bandwidth is limited. Because the protocol is limited it does not introduce any significant delay and is therefore suited to time-critical applications such as streaming live video footage. UDP provides no facilities for ensuring that the data arrives at the receiver and there is no method of determining whether packets arrive in the correct order. UDP is therefore considered to be a fast but unreliable protocol.

TCP is intended for use with IP to provide a reliable method of sending data. Reliability is achieved through the use of positive acknowledgements, which are sent by the receiver when the data packets are correctly received. When the transmitter sends a packet a timer is started. If an acknowledgement is not received within a given time then the packet is retransmitted. The process is repeated until the packet is successfully received. TCP is considered to be a reliable but slow protocol. A significant quantity of data must be buffered to ensure continuity of playback; the protocol is thus unsuitable for applications where delay is not tolerable, for instance video communication.

Figure 2 shows the structure of the data capturing client 102. Media is received from source 101 and passed to an encoder 201 for compression in accordance with the International Telecommunications Union Telecommunication Standardization Sector (ITU-T) H.263 standard. The compressed data is then prepared for transmission on the Internet 103 by packetising the compressed data using the Real Time Protocol (RTP). RTP is intended for use in transporting real-time data, such as video data. RTP is intended for use in conjunction with User Datagram Protocol (UDP) and Transport Control Protocol (TCP), and contains extra header information to aid multimedia delivery not included in IP or UDP headers. A packet of data contains a header section and a content section. The header section contains control information and in particular the RTP header contains timing information and the RTP packet number, which can be used by the receiver to ensure that packets are decoded in the correct order (UDP does not include a sequence number so it is therefore not possible to re-order packets that arrive out of order).

From the RTP packetiser 202 the RTP data packets are sent to a network interface 203 and a copy of each RTP packet is written to a temporary buffer 205. The network interface 203 controls the transmitting and receiving of data over the Internet 103. IP headers are added here which ensure the RTP packets arrive at the intended destination. The network interface 203 is also capable of adding TCP or UDP headers. The network interface 203 also receives data from the Internet 103.

A controller 206 is provided which is capable of sending and receiving RTP data packets to and from the network interface 203, reading RTP packets from the temporary buffer 205 and reading and writing RTP packets to and from a lost packet store 204. The lost packet store 204 is provided for storing packets which have been lost during transmission, by means of a mechanism to be described below. During transmission the number of lost packets in the lost packet store 204 will increase until transmission in the UDP mode ceases, whereupon the contents of the lost packet store 204 are transmitted. If the capacity of the lost packet store 204 is reached then transmission in UDP mode will be forced to cease. The capacity of the lost packet store 204 is therefore a limiting factor in the length of time the client can record multimedia data for.

The controller 206 is responsible for coordinating the recording operation of the client 102. Given the limited bandwidth of the wireless link, the user's quality requirement and the limited storage capacity of the lost frame store 204, the recording parameters of the client 102 need to be carefully coordinated. The bit rate at which multimedia data is encoded by encoder 201 can exceed the capacity of the network because the packets that are lost will be replaced. However, the more packets that are lost, the larger the lost packet store 204 should be for a given recording time.

The server 104 will now be described with reference to Figure 3. The server 104 communicates with external devices via a network interface 301. The interface is capable of adding and removing IP, UDP and TCP header information. The network interface 301 is capable of sending and receiving data from and to an RTP module 302, which de-packetises received data packets. The RTP module 302 is responsible for ordering the data packets and detecting packets which have been lost during transmission. The RTP module 302 also issues an appropriate message to the client 102; there are two types of message which are utilised in the preferred embodiment; a positive acknowledgement (ACK) which is periodically sent by the server 104 to indicate that all packets in the last ACK period have been received, and a negative acknowledgement (NACK) which is transmitted by the server 104 when the server 104 detects packet loss. A NACK message contains the identity of the lost packet. All messages are sent reliably using TCP.

The RTP module 302 is in communication with an archive 303 into which all received data packets are sent.

As mentioned above, the recorded media may be retrieved from the archive 303 of the server 104 by a separate receiving client 105. The structure of the receiving client 105 will now be described with reference to Figure 4. Data is exchanged with the Internet 103 via a network interface 401. In the preferred embodiment the network interface is predominantly required to receive packets from the Internet 103. The network interface 401 is in communication with an RTP module 402 which extracts the multimedia data from the RTP data packets received from the network interface 401. The RTP module 402 is in communication with a decoder 403 which decodes the compressed data which, in the case of video may be viewed on a display 404.

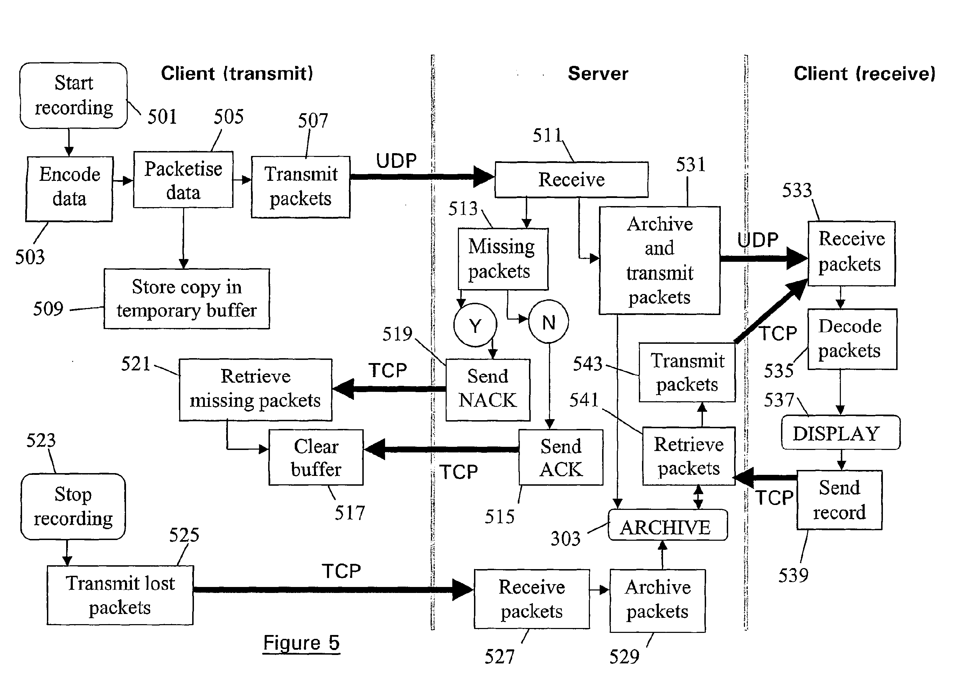

Referring to figure 5, in operation, the client 102 is in record mode (501). When recording commences, the client 102 sends a message reliably using TCP to the server 104 to establish contact and to request that the server then prepare to receive UDP data packets from the client 102 (this stage is not shown in the diagram). Multimedia data is captured and encoded (503) in encoder 201 and then packetised (505) at the RTP packetiser 202. The data packets are then transmitted (507) to the network interface 203 for onward transmission via the Internet 103 to the server 104 using unreliable UDP. The client also stores (509) a copy of the transmitted packets in temporary buffer 203 which serves as a library of recently transmitted data packets and may be drawn upon to replace packets which go missing during transmission. The server 104 receives data packets (511) and puts them into order for archiving (531) in archive 303. The RTP module 302 checks (513) for any packets that have been lost during transmission. An ACK message is returned to the client (515) to indicate that no packets have been lost during the ACK period. The ACK period is set to according to the capacity of the temporary store. A long ACK period is preferable to reduce the amount of network traffic, although the bandwidth requirement of an ACK message is minimal. Upon receipt of the ACK message, the controller 206 of the client 102 deletes (517) the contents of the temporary buffer 205 because the contents of the temporary buffer 205 are now known to have arrived safely at the server 104. As soon as a packet is recognised as missing by the server 104 a NACK message containing the RTP sequence number of the missing packet is sent (519) to the client reliably using TCP. In other embodiments a NACK message could be sent at predefined intervals or upon completion of the transmission. The controller 206 of the client 102 retrieves the missing packet (521) from the temporary buffer 205 and places it in the lost packet store 204. The controller 206 then deletes (517) the packets in the temporary buffer which pre-date the missing packet. The process is continued until the user stops recording, either voluntarily or involuntarily because the lost packet store 204 is full.

When the stop recording signal is received (523), the client 102 transmits (525) the contents of the lost packet store 204 to the server 104 using the reliable TCP mechanism. The missing packets are received (527) by the server 104 and sent (529) to the archive 303. The archive 303 is re-ordered to accommodate the missing data.

As mentioned above, the third party receiving client 105 may choose to view the live media as it is being recorded. In this instance it is preferable to use UDP. At any time during the recording session the receiving client 105 may make contact with the server 104 to request that multimedia data be forwarded. When this request is received, a separate process is started whereby the server 104 transmits (531) the received data packets to the receiving client at the same time as they are written to the archive 303. The data packets are received (533) by the receiving client 105, decoded (535) and displayed (537). In this way the receiving client 105 receives the multimedia data that is being captured by the transmitting client 102 in real-time.

The received data at this stage will possibly contain errors and therefore will be of a low quality. The RTP module 402 of the receiving client 105 keeps a record of all of the RTP sequence numbers of the lost data packets.

After viewing the low quality multimedia clip the user may then decide that a high quality version is required. The receiving client 105 then sends (539) the record of the lost data packets via TCP to the server 104, whereupon the server 104 retrieves (541) the identified data packets from the archive 303 and re-transmits (543) the lost data packets using reliable TCP. The receiving client then has a complete, high quality version of the multimedia data.

Within the embodiments described above, alternative arrangements are possible. Buffering other information as well as lost packets for transmission at a later time is possible. For instance, if layered coding was to be employed, the base layer could be sent from the transmitter to the receiver using the fast UDP mechanism, while the higher layers and lost packets could be transmitted later using the reliable TCP mechanism.

The skilled person will recognise that the invention is not limited to the use of TCP and UDP transport protocols: UDP is selected as an example of a fast unreliable transport protocol while TCP is selected as an example of a reliable transport protocol.

The skilled person will realise that a multimedia streaming system is an example of a data transmission system.

In the above described embodiment, the communication path between the client 102 and the server 104 is via a plurality of concatenated data links. The invention is also applicable to data transfer via a single data link - e.g. a radio link.

## Claims

1. A method of operating a data transmission system comprising:
transmitting data packets from a first media device to a second media device using a first transfer mode, wherein said first transfer mode employs an unreliable data transfer protocol;
identifying missing data packet(s) which do not arrive at the second media device;
sending a message or messages containing the identity of the missing data packet(s) from the second media device to the first media device,
wherein, upon completion of the transmission of data packets using said first transfer mode the first media device transmits data packet(s) identified as missing to the second media device using a second transfer mode, wherein said second transfer mode employs a reliable data transfer protocol.

2. A method of operating a data transmission system in accordance with claim 1, wherein a message containing the identity of a missing data packet is sent when a data packet is identified as missing.

3. A method of operating a data transmission system in accordance with claim 1, wherein a message containing the identity of missing data packets is sent at predefined intervals.

4. A method of operating a data transmission system in accordance with claim 1, wherein a message containing the identity of missing data packets is sent upon completion of the transfer of data in the first transfer mode.

5. A method of operating a data transmission system in accordance with any one of the preceding claims wherein the first media device saves a copy of the transmitted data in a first store until the message containing the identity of the missing data packet or packets is received from the second media device, whereupon the identified data packet(s) is/are transferred from the first store to a second store.

6. A method of operating a data transmission system in accordance with any one of the preceding claims wherein the first media device is arranged in operation to capture multimedia data and wherein the second media device comprises a data store for storing the multimedia data captured by the first media device.

7. A method of operating a data transmission system in accordance with any one of claims 1 to 5 wherein the first media device comprises a data store arranged in operation to store multimedia data and wherein the second media device comprises equipment arranged to present the multimedia data to a user.

8. A method according to any one of the preceding claims wherein the message(s) containing the identity of the missing data packet(s) is transmitted using the first transfer mode.

9. A method according to any one of the preceding claims wherein the message(s) containing the identity of the missing data packet(s) is transmitted using the second transfer mode.

10. A method according to any one of the preceding claims wherein the unreliable data transfer protocol is the standard User Datagram Protocol (UDP).

11. A method according to any one of the preceding claims wherein the reliable data transfer protocol is the standard Transport Control Protocol (TCP).

12. A method of operating a media transmission device comprising;
transmitting data packets from the media transmission device to a receiver using a first transfer mode, wherein the first transfer mode employs an unreliable data transfer protocol,
receiving a message or messages containing the identity of missing data packet(s) which do not arrive at the receiver,
wherein, when the transmission of data packets is complete the media transmission device transmits data packet(s) identified as missing to the receiver using a second transfer mode, wherein said second transfer mode employs a reliable data transfer protocol.

13. A method of operating a media reception device comprising;
receiving data packets from a transmitter which have been transmitted in a first transfer mode, wherein the first transfer mode employs an unreliable data transfer protocol,
identifying data packet(s) which were expected but are missing,
sending a message or messages to the transmitter wherein said message or messages contain the identity of the missing data packet(s),
receiving, from the transmitter, the data packet(s) which were identified in the message or messages, wherein said data packet(s) are received in a second transfer mode which employs a reliable data transfer protocol.

14. A media transmission device comprising;
transmission means for transmitting data packets from the media transmission device to a receiver using a first transfer mode, wherein said first transfer mode employs an unreliable data transfer protocol,
receiving means for receiving a message or messages containing the identity of missing data packet(s) which do not arrive at the receiver,
wherein, the device further comprises;
control means arranged such that, upon completion of the transmission of data packets using said first mode the media transmission device transmits data packet(s) identified as missing to the receiver using a second transfer mode, wherein said second transfer mode employs a reliable data transfer protocol.

15. A media reception device comprising;
receiving means for receiving data packets from a transmitter which have been transmitted in a first transfer mode, wherein the first transfer mode employs an unreliable data transfer protocol,
identifying means for identifying data packet(s) which were expected but are missing,
sending means for sending a message or messages to the transmitter wherein said message or messages contain the identity of the missing data packet(s),
receiving means for receiving, from the transmitter, the data packet(s) which were identified in the message or messages, wherein said data packet(s) are received in a second transfer mode which employs a reliable data transfer protocol.

16. A data transmission system comprising;
a media transmission device according to claim 14,
a media reception device according to claim 15 wherein, said media reception device is in communication with said media transmission device.

17. A data transmission system in accordance with claim 16 further comprising a network arranged in operation to provide said communication between said media transmission device and said media reception device.

18. A digital data carrier carrying a program of instructions executable by processing apparatus to perform the method steps as set out in any one of claims 1 to 13.

## Patentansprüche

1. Verfahren zum Betreiben eines Datenübertragungssystems, aufweisend:
- Übertragen von Datenpaketen von einem ersten Mediengerät zu einem zweiten Mediengerät unter Verwendung eines ersten Übertragungsmodus, wobei der erste Übertragungsmodus ein unzuverlässiges Datenübertragungsprotokoll verwendet;
- Ermitteln von einem oder von mehreren fehlenden Datenpaketen, die nicht an dem zweiten Mediengerät angekommen sind;
- Senden von einer oder mehren, die Identität des oder der fehlenden Datenpakete enthaltenden Meldungen von dem zweiten Mediengerät an das erste Mediengerät,
wobei, nachdem die Übertragung der Datenpakete unter Verwendung des ersten Übertragungsmodus abgeschlossen ist, das erste Mediengerät das bzw. die als fehlend ausgewiesenen Datenpakete unter Verwendung eines zweiten Übertragungsmodus an das zweite Mediengerät sendet, und
wobei der zweite Übertragungsmodus ein zuverlässiges Datenübertragungsprotokoll verwendet.

2. Verfahren zum Betreiben eines Datenübertragungssystems nach Anspruch 1, worin, wenn ein Datenpaket als fehlend ermittelt wird, eine Meldung übersandt wird, die die Identität eines fehlenden Datenpakets ausweist.

3. Verfahren zum Betreiben eines Datenübertragungssystems nach Anspruch 1, worin in vorgegebenen zeitlichen Abständen eine Meldung übersandt wird, die die Identität fehlender Datenpakete ausweist.

4. Verfahren zum Betreiben eines Datenübertragungssystems nach Anspruch 1, worin nach Abschluss der Datenübertragung im ersten Übertragungsmodus eine Meldung übersandt wird, die die Identität fehlender Datenpakete ausweist.

5. Verfahren zum Betreiben eines Datenübertragungssystems nach einem der vorangehenden Ansprüche, worin das erste Mediengerät solange eine Kopie der übertragenen Daten in einem ersten Speicher aufbewahrt, bis von dem zweiten Mediengerät eine Meldung mit dem Inhalt der Identität des oder der fehlenden Datenpakete empfangen wird, woraufhin das bzw. die darin identifizierten Datenpakete von dem ersten Speicher in einen zweiten Speicher überführt werden.

6. Verfahren zum Betreiben eines Datenübertragungssystems nach einem der vorangehenden Ansprüche, worin das erste Mediengerät dazu ausgebildet ist, während des Betriebs Multimediadaten zu erfassen, und worin das zweite Mediengerät einen Datenspeicher zum Speichern der Multimediadaten, die von dem ersten Mediengerät erfasst wurden, aufweist.

7. Verfahren zum Betreiben eines Datenübertragungssystems nach einem der Ansprüche 1 bis 5, worin das erste Mediengerät einen Datenspeicher aufweist, der dazu ausgebildet ist, während des Betriebs Multimediadaten zu speichern, und worin das zweite Mediengerät eine Einrichtung aufweist, die zum Präsentieren der Multimediadaten gegenüber einem Benutzer ausgebildet ist.

8. Verfahren nach einem der vorangehenden Ansprüche, worin die Meldung bzw. die Meldungen, welche die Identität des bzw. der fehlenden Datenpakete ausweisen, unter Verwendung des ersten Übertragungsmodus übertragen werden.

9. Verfahren nach einem der vorangehenden Ansprüche, worin die Meldung bzw. die Meldungen, welche die Identität des bzw. der fehlenden Datenpakete ausweisen, unter Verwendung des zweiten Übertragungsmodus übertragen werden.

10. Verfahren nach einem der vorangehenden Ansprüche, worin das standarmäßige User Datagram Protocol (UDP) das unzuverlässige Datenübertragungsprotokoll bildet.

11. Verfahren nach einem der vorangehenden Ansprüche, worin das standardmäßige Transport Control Protocol (TCP) das zuverlässige Datenübertragungsprotokoll bildet.

12. Verfahren zum Betreiben eines Medienübertragungsgeräts, aufweisend:
- Übertragen von Datenpaketen von dem Medienübertragungsgerät an einen Empfänger unter Verwendung eines ersten Übertragungsmodus, wobei der erste Übertragungsmodus ein unzuverlässiges Datenübertragungsprotokoll verwendet,
- Empfangen einer oder mehrerer Meldungen, die die Identität von einem oder von mehreren fehlenden Datenpaketen ausweisen, die nicht am Empfänger angekommen sind,
wobei das Medienübertragungsgerät nach Abschluss der Übertragung der Datenpakete unter Verwendung eines zweiten Übertragungsmodus ein oder mehrere Datenpakete sendet, die am Empfänger als fehlend ermittelt wurden, und wobei der zweite Übertragungsmodus ein zuverlässiges Datenübertragungsprotokoll verwendet.

13. Verfahren zum Betreiben eines Medienempfangsgeräts, aufweisend:
- Empfangen von Datenpaketen von einem Sender, die in einem ersten Übertragungsmodus gesendet wurden, wobei der erste Übertragungsmodus ein unzuverlässiges Datenübertragungsprotokoll verwendet,
- Ermitteln des bzw. der Datenpakete, die erwartet wurden aber fehlen,
- Senden von einer oder mehreren Meldungen an den Sender, wobei die Meldung oder die Meldungen die Identität des bzw. der fehlenden Datenpakete ausweisen,
- Empfangen des bzw. der Datenpakete von dem Sender, die in der bzw. den Meldungen ausgewiesen wurden, wobei das bzw. die Datenpakete in einem zweiten Übertragungsmodus empfangen werden, der ein zuverlässiges Datenübertragungsprotokoll verwendet.

14. Medienübertragungsgerät, das aufweist:
- eine Sendeeinrichtung zum Senden von Datenpaketen von dem Medienübertragungsgerät zu einem Empfänger unter Verwendung eines ersten Übertragungsmodus, wobei der erste Übertragungsmodus ein unzuverlässiges Datenübertragungsprotokoll verwendet,
- eine Empfangseinrichtung zum Empfangen einer oder mehrerer Meldungen, die die Identität eines oder mehrerer fehlender Datenpakete ausweisen, die nicht beim Empfänger angekommen sind,
wobei das Gerät ferner aufweist:
- eine Steuereinrichtung, die so ausgebildet ist, dass das Medienübertragungsgerät nach Abschluss der Übertragung von Datenpaketen unter Verwendung des ersten Modus ein oder mehrere als fehlend ausgewiesene Datenpakete an den Empfänger unter Verwendung eines zweiten Übertragungsmodus sendet, wobei der zweite Übertragungsmodus ein zuverlässiges Datenübertragungsprotokoll verwendet.

15. Medienempfangsgerät, das aufweist:
- eine Empfangseinrichtung zum Empfangen von Datenpaketen, die von einem Sender in einem ersten Übertragungsmodus gesendet wurden, wobei der erste Übertragungsmodus ein unzuverlässiges Datenübertragungsprotokoll verwendet,
- eine Ermittlungseinrichtung zum Ermitteln eines oder mehrerer Datenpakete, die erwartet wurden, aber fehlen,
- eine Sendeeinrichtung zum Senden einer oder mehrerer Meldungen an den Sender, wobei die eine oder die mehreren Meldungen die Identität des bzw. der fehlenden Datenpakete ausweisen,
- eine Empfangseinrichtung zum Empfangen des bzw. der Datenpakete von dem Sender, die in der bzw. den Meldungen ausgewiesen wurden, wobei das bzw. die Datenpakete in einem zweiten Übertragungsmodus empfangen werden, der ein zuverlässiges Datenübertragungsprotokoll verwendet.

16. Datenübertragungssystem, das aufweist:
- ein Medienübertragungsgerät nach Anspruch 14,
- ein Medienempfangsgerät nach Anspruch 15, wobei das Medienempfangsgerät mit dem Medienübertragungsgerät in Verbindung steht.

17. Datenübertragungssystem nach Anspruch 16, das ferner ein Netzwerk aufweist, das während des Betriebs dazu ausgebildet ist, die Verbindung zwischen dem Medienübertragungsgerät und dem Medienempfangsgerät herzustellen.

18. Digitaler Datenträger, auf dem ein Programm mit Anweisungen enthalten ist, die bei Ausführung durch eine Datenverarbeitungsanlage die in den Ansprüchen 1 bis 13 aufgeführten Verfahrensschritte umsetzen.

## Revendications

1. Procédé de mise en oeuvre d'un système de transmission de données comprenant les étapes consistant à :
transmettre des paquets de données d'un premier dispositif de média à un second dispositif de média en utilisant un premier mode de transfert, dans lequel ledit premier mode de transfert emploie un protocole de transfert de données non fiable,
identifier le ou les paquets de données manquants qui n'arrivent pas au second dispositif de média,
envoyer un message ou des messages contenant l'identité du ou des paquets de données manquants du second dispositif de média au premier dispositif de média,
dans lequel, à l'achèvement de la transmission des paquets de données en utilisant ledit premier mode de transfert, le premier dispositif de média transmet le ou les paquets de données identifiés comme manquants au second dispositif de média en utilisant un second mode de transfert, dans lequel ledit second mode de transfert emploie un protocole de transfert de données fiable.

2. Procédé de mise en oeuvre d'un système de transmission de données selon la revendication 1, dans lequel un message contenant l'identité d'un paquet de données manquant est envoyé lorsqu'un paquet de données est identifié comme manquant.

3. Procédé de mise en oeuvre d'un système de transmission de données selon la revendication 1, dans lequel un message contenant l'identité de paquets de données manquants est envoyé à des intervalles prédéfinis.

4. Procédé de mise en oeuvre d'un système de transmission de données selon la revendication 1, dans lequel un message contenant l'identité de paquets de données manquants est envoyé à l'achèvement du transfert de données dans le premier mode de transfert.

5. Procédé de mise en oeuvre d'un système de transmission de données selon l'une quelconque des revendications précédentes, dans lequel le premier dispositif de média sauvegarde une copie des données transmises dans une première mémoire jusqu'à ce que le message contenant l'identité du paquet ou des paquets de données manquants soit reçu du second dispositif de média, sur quoi le ou les paquets de données identifiés est/sont transférés de la première mémoire à une seconde mémoire.

6. Procédé de mise en oeuvre d'un système de transmission de données selon l'une quelconque des revendications précédentes, dans lequel le premier dispositif de média est agencé en fonctionnement pour acquérir des données multimédias et dans lequel le second dispositif de média comprend une mémoire de données destinée à mémoriser les données multimédias acquises par le premier dispositif de média.

7. Procédé de mise en oeuvre d'un système de transmission de données selon l'une quelconque des revendications 1 à 5, dans lequel le premier dispositif de média comprend une mémoire de données agencée en fonctionnement pour mémoriser des données multimédias et dans lequel le second dispositif de média comprend un équipement agencé pour présenter les données multimédias à un utilisateur.

8. Procédé selon l'une quelconque des revendications précédentes, dans lequel le ou les messages contenant l'identité du ou des paquets de données manquants est/sont transmis en utilisant le premier mode de transfert.

9. Procédé selon l'une quelconque des revendications précédentes, dans lequel le ou les messages contenant l'identité du ou des paquets de données manquants est/sont transmis en utilisant le second mode de transfert.

10. Procédé selon l'une quelconque des revendications précédentes, dans lequel le protocole de transfert de données non fiable est le protocole de datagramme utilisateur (UDP) standard.

11. Procédé selon l'une quelconque des revendications précédentes, dans lequel le protocole de transfert de données fiable est le protocole de commande de transmission (TCP) standard.

12. Procédé de mise en oeuvre d'un dispositif de transmission de média comprenant les étapes consistant à :
transmettre des paquets de données du dispositif de transmission de média à un récepteur en utilisant un premier mode de transfert, dans lequel le premier mode de transfert emploie un protocole de transfert de données non fiable,
recevoir un message ou des messages contenant l'identité d'un paquet ou de paquets de données manquants qui n'arrivent pas au récepteur,
dans lequel, lorsque la transmission de paquets de données est achevée, le dispositif de transmission de média transmet le ou les paquets de données identifiés comme manquants au récepteur en utilisant un second mode de transfert, dans lequel ledit second mode de transfert emploie un protocole de transfert de données fiable.

13. Procédé de mise en oeuvre d'un dispositif de réception de média comprenant les étapes consistant à :
recevoir les paquets de données d'un émetteur qui ont été transmis dans un premier mode de transfert, le premier mode de transfert employant un protocole de transfert de données non fiable,
identifier un paquet ou des paquets de données qui sont attendus mais sont manquants,
envoyer un message ou des messages à l'émetteur, ledit ou lesdits messages contenant l'identité du ou des paquets de données manquants,
recevoir, de l'émetteur, le ou les paquets de données qui ont été identifiés dans le message ou les messages, ledit ou lesdits paquets de données étant reçus dans un second mode de transfert qui emploie un protocole de transfert de données fiable.

14. Dispositif de transmission de média comprenant :
un moyen de transmission destiné à émettre des paquets de données du dispositif de transmission de média à un récepteur en utilisant un premier mode de transfert, ledit premier mode de transfert employant un protocole de transfert de données non fiable,
un moyen de réception destiné à recevoir un message ou des messages contenant l'identité d'un ou de paquets de données manquants qui n'arrivent pas au récepteur,
dans lequel le dispositif comprend en outre
un moyen de commande agencé de sorte que, à l'achèvement de la transmission de paquets de données en utilisant ledit premier mode, le dispositif de transmission de média transmet le ou les paquets de données identifiés comme manquants au récepteur en utilisant un second mode de transfert, ledit second mode de transfert employant un protocole de transfert de données fiable.

15. Dispositif de réception de média comprenant :
un moyen de réception destiné à recevoir des paquets de données d'un émetteur qui ont été transmis dans un premier mode de transfert, le premier mode de transfert employant un protocole de données non fiable,
un moyen d'identification destiné à identifier le ou les paquets de données qui sont attendus mais sont manquants,
un moyen d'envoi destiné à envoyer un message ou des messages à l'émetteur, dans lequel ledit message ou lesdits messages contiennent l'identité du ou des paquets de données manquants,
un moyen de réception destiné à recevoir, de l'émetteur, le ou les paquets de données qui ont été identifiés dans le message ou les messages, ledit paquet ou lesdits paquets étant reçus dans un second mode de transfert qui emploie un protocole de transfert de données fiable.

16. Système de transmission de données comprenant :
un dispositif de transmission de média selon la revendication 14,
un dispositif de réception de média selon la revendication 15, ledit dispositif de réception de média étant en communication avec ledit dispositif de transmission de média.

17. Système de transmission de données selon la revendication 16, comprenant en outre un réseau agencé en fonctionnement pour permettre ladite communication entre ledit dispositif de transmission de média et ledit dispositif de réception de média.

18. Support de données numériques contenant un programme d'instructions exécutables par un dispositif de traitement pour exécuter les étapes du procédé telles que décrites dans l'une quelconque des revendications 1 à 13.
